# EUROPÄISCHE PATENTSCHRIFT

(11) **EP 1 491 887 B1**
(45) Veröffentlichungstag und Bekanntmachung des Hinweises auf die Patenterteilung: **01.03.2006**
(21) Anmeldenummer: 04014679.7
(22) Anmeldetag: 23.06.2004
(51) Int. Cl.: G01N 29/11, G01N 15/08

(54) **Verfahren zum Ermitteln der Porosität eines Werkstückes mittels Ultraschall**
Method for ultrasonic determination of the porosity of a workpiece
Procédé de détermination ultrasonore de la porosité d'un échantillon

(30) Priorität: 27.06.2003 DE 10329142
(43) Veröffentlichungstag der Anmeldung: 29.12.2004
(73) Patentinhaber: intelligeNDT Systems & Services GmbH & Co KG, 91058 Erlangen (DE)
(72) Erfinder: Meier, Rainer, 91058 Erlangen (DE)
(74) Vertreter: Mörtel & Höfner

(56) Entgegenhaltungen:
- US-A1- 2002 066 318
- L.-K. SHARK, C. YU: "Automatic estimation of ultrasonic attenuation for porosity evaluation in composite materials" NDT.NET, [Online] Nr. 223, 2000, XP002301048 15TH WCNDT ROMA 2000 Gefunden im Internet: URL:http://www.ndt.net/article/wcndt00/pap ers/idn223/idn223.htm> [gefunden am 2004-10-15]
- DEUTSCH V ET AL: "3.4 Fehlernachweis und Gerätejustierung" ULTRASCHALLPRUEFUNG: GRUNDLAGEN UND INDUSTRIELLE ANWENDUNGEN, XX, XX, 1997, Seiten 80-145, XP002301049
- HANS ERIK GUNDTOFT: "Quantitative material characterisation of composites by ultrasonic scanning" NDT.NET, [Online] Nr. 531, 2000, XP002301050 15TH WCNDT ROMA 2000 Gefunden im Internet: URL:http://www.ndt.net/article/wcndt00/pap ers/idn531/idn531.htm> [gefunden am 2004-10-15]
- SOUFFLET C ET AL INSTITUTE OF ELECTRICAL AND ELECTRONICS ENGINEERS: "ATTENUATION MEASUREMENT AND FLAW DETECTION IN GRAPHITE EPOXY COMPOSITES WITH RANDOM PHASE TRANSDUCERS" PROCEEDINGS OF THE ULTRASONICS SYMPOSIUM. CHICAGO, OCT. 2 - 5, 1988, NEW YORK, IEEE, US, 2. Oktober 1988 (1988-10-02), Seiten 1035-1039, XP000077086

## Beschreibung

Die Erfindung bezieht sich auf ein Verfahren zum Ermitteln und Beurteilen der Porosität eines Werkstückes, insbesondere eines Werkstückes aus einem Faserverbundwerkstoff. Werkstücke, insbesondere Werkstücke aus Faserverbundwerkstoffen wie z.B. glasfaserverstärkte oder kohlefaserverstärkte Kunststoffe (GFK bzw. CFK), können bedingt durch das jeweils gewählte Herstellungsverfahren eine hohe Porosität aufweisen. Diese stellt insbesondere bei mechanisch hoch beanspruchten und sicherheitsrelevanten Bauteilen ein erhebliches Problem dar.

Aus Gundtoft, Hans Erik, "Quantitative material characterisation of composites by ultrasonic scanning", 15^{th} WCNDT Conference Roma 2000, publiziert im Internet unter der Adresse www.ndt.net/article/wcndt00/papers/idn531/idn531.htm ist ein Verfahren zum Ermitteln der Porosität eines Faserverbundwerkstoffes bekannt, bei dem in das Bauteil ein Ultraschallsignal eingekoppelt wird und entweder die Amplitude des Rückwandechosignals oder die Schwächung des transmittierten Ultraschallsignals erfasst und mit den entsprechenden Signalen eines einwandfreien Bauteils verglichen werden. Eine niedrigere Amplitude des Rückwandechosignals bzw. des transmittierten Ultraschallsignals ist dabei ein Indiz für das Vorhandensein von porösen Stellen innerhalb des Bauteils. Dieses bekannte Verfahren setzt voraus, dass das Bauteil im zu beurteilenden Bereich hinreichend parallele Oberflächen aufweist, um verwertbare Rückwandechosignale oder transmittierte Ultraschallsignale erhalten können. Darüber hinaus ist eine Aussage über die Tiefenverteilung der Poren im Werkstoff nicht möglich. Eine Aussage über die Tiefenverteilung der Poren kann jedoch insofern nützlich sein, als erhöhte Porosität beispielsweise in Bereichen, in denen das Bauteil nur kleinen Schubspannungen unterworfen ist, durchaus tolerabel sein kann, während sie in Zonen mit höheren Schubspannungen parallel zur Laminatebene zur schnellen Zerstörung des Bauteils führen kann.

Aus Shark L.-K., Yu, C., "Automatic estimation of ultrasonic attenuation for porosity evaluation in composite material", 15^{th} WCNDT Conference Roma 2000, ist es bekannt, das Rückwandechosignal mit einer sogenannten wavelet-Analyse zu korrigieren, wobei zur Beurteilung der Porosität das Verhältnis zwischen Amplitude des Eintrittsechosignals und Amplitude des korrigierten Rückwandechosignals verwendet wird.

Der Erfindung liegt nun die Aufgabe zu Grunde, ein Verfahren zum Ermitteln der Porosität eines Werkstoffes anzugeben, das sowohl eine Aussage über das Ausmaß der Porosität als auch über die Tiefenlage ermöglicht.

Die genannte Aufgabe wird gemäß der Erfindung gelöst mit den Merkmalen des Patentanspruches 1. Bei dem Verfahren zum Ermitteln der Porosität eines Werkstückes, insbesondere eines Werkstückes aus einem Faserverbundwerkstoff, wird in das Werkstück ein Ultraschallsignal eingekoppelt und aus dem Werkstück ein Ultraschallechosignal empfangen und dessen Amplitude in Abhängigkeit von der Laufzeit gemessen und einer Tiefe zugeordnet, und der Verlauf der Amplitude des Ultraschallechosignals gegen die Tiefe im Werkstück wird als Maß für die Porosität in der jeweiligen Tiefe herangezogen. Da zur Auswertung die Abhängigkeit des Ultraschallechosignals von der Tiefe (Laufzeit) analysiert wird, ist es möglich, anhand dieses Verlaufes auch Aussagen über den in der jeweiligen Tiefe vorliegenden Porositätsgrad zu erhalten.

Die Erfindung beruht dabei auf der Erkenntnis, dass das Ausmaß der im Bauteil in einer gegebenen Tiefe gestreuten und von einem Ultraschallempfänger als Ultraschallechosignale erfassten Ultraschallsignale wesentlich von dem Porositätsgrad und der Verteilung der Poren im Werkstück abhängt. Durch Vergleich mit einem porenfreien oder porenarmen Referenzwerkstück oder mit porenarmen Referenzzonen am selben Werkstück kann qualitativ auf den Porositätsgrad und die Porositätsverteilung innerhalb des Werkstückes geschlossen werden. Als besonders geeignetes Kriterium zur Beurteilung der Porosität hat sich dabei die mittlere Steigung des von der Tiefe abhängigen Ultraschallechosignals herausgestellt.

Weitere vorteilhafte Ausgestaltungen der Erfindung sind in den Unteransprüchen wiedergegeben.

Zur weiteren Erläuterung der Erfindung wird auf die Zeichnung verwiesen. Es zeigen:
- Fig. 1: ein Diagramm, in dem der prinzipielle Verlauf der Amplitude des zurückgestreuten Ultraschallechosignals und des Räkwandechosignals bei einem porösen und einem nichtporösen Bauteil gegen die Dicke des Bauteils aufgetragen ist,
- Fig. 2: ein Diagramm, in dem die Amplitude des vom Ultraschallempfänger empfangenen Ultraschallechosignals für ein poröses bzw. ein nichtporöses Bauteil mit einer Dicke von etwa 8mm gegen die Tiefe (Laufzeit) aufgetragen ist,
- Fig. 3: und 4 zeigen eine Draufsicht bzw. einen Schnitt durch ein zu prüfendes Bauteil mit jeweils einem schematisch veranschaulichten Prüfkopf,
- Fig. 5: zeigt den zeitlichen Signalverlauf der vom Ultraschallempfänger empfangenen Ultraschallsignale,
- Fig. 6: ein Diagramm, in dem die Amplitude des empfangenen Ultraschallsignals für ein Bauteil mit einer Dicke von etwa 9mm gegen die Tiefe für zwei unterschiedliche Bauteile aufgetragen ist.

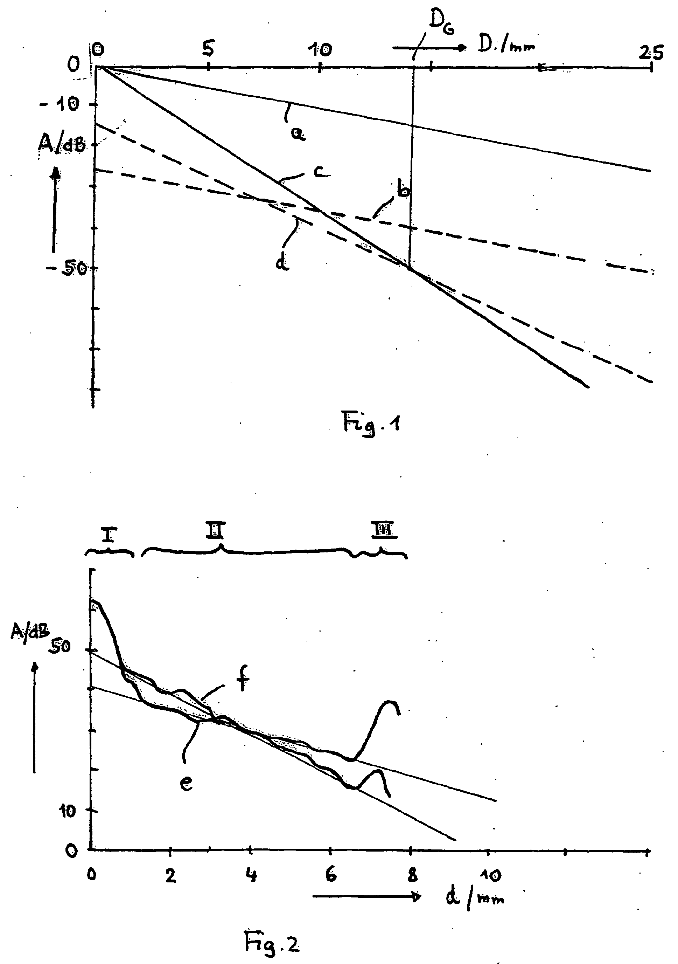

Im Diagramm gemäß Fig. 1 ist die Amplitude A des empfangenen Ultraschallechosignals in Abhängigkeit von der Dicke D des Bauteils aufgetragen. Kurven a und b zeigen den Verlauf der Amplitude des Rückwandechosignals bzw. des Rückstreuechosignals eines nichtporösen Bauteils, Kurven c und d den Verlauf der Amplitude A des Rückwandechosignals bzw. des Rückstreuechosignals eines porösen Bauteils. Den Kurven a und c ist nun zu entnehmen, dass bei einem porösen Bauteil die Amplitude A des Rückwandechosignals mit zunehmender Dicke D des Bauteils in einem signifikant stärkeren Maße abnimmt als bei einem Bauteil mit geringer Porosität. Gemäß Kurve a ergibt sich beispielsweise für ein nicht poröses Bauteil mit einer Dicke D = 15mm eine Schwächung des Rückwandechosignals um etwa 15dB. Demgegenüber ist das Rückwandechosignal bei einem Bauteil gleicher Dicke d jedoch großer Porosität um nahezu nochmals 40dB geschwächt. Kurven b und d ist nun zu entnehmen, dass die Amplitude A der Rückstreuechosignale bei einem Bauteil mit geringer Porosität mit wachsender Tiefe im Bauteil deutlich weniger abnimmt als bei einem porösen Bauteil. Die Amplitude A des Rückstreuechosignals bei einem porösen Bauteil ist wegen der vorhandenen Poren für geringe Tiefen (im Beispiel bis zu einer Tiefe von etwa 7,5mm) höher als bei einem Bauteil mit geringerer Porosität, nimmt dann aber mit wachsender Tiefe deutlich schneller ab, da einerseits das in größere Tiefen vordringende Ultraschallsignal und andererseits das aus diesen Tiefen zurückgestreute Rückstreuechosignal durch Streuung an den darüber liegenden Poren auf dem Hin- bzw. Rückweg abgeschwächt werden.

Im Beispiel ist bei einer Grenzdicke oder -tiefe D_{G} von etwa 14mm die Amplitude A des Rückwandechosignals eines porösen Bauteils etwa gleich der Amplitude A des Rückstreuechosignals, so dass das Rückwandechosignal bei Werkstoffen mit einer größeren Dicke D nicht mehr erkennbar ist.

Im Diagramm gemäß Fig. 2 sind in Kurven e und f jeweils die gemessenen Amplituden A des empfangenen Ultraschallsignals gegen die Tiefe d (Laufzeit) für zwei Bauteile mit einer Dicke von 7mm aufgetragen. Kurve e gibt die an einem Bauteil mit geringer Porosität und Kurve f die an einem Bauteil mit hoher Porosität gemessenen Amplituden wieder. Beide Kurven setzen sich aus drei Bereichen I, II, III zusammen. Im oberflächennahen Bereich I ist der Signalverlauf im wesentlichen geprägt durch das Eintrittsechosignal. Der Bereich I bildet aufgrund des ausgeprägten Eintrittsechos eine Zone, die für die Auswertung nicht verwertbar ist und in der Praxis bei einer Prüffrequenz von 5 MHz etwa 1 - 2 mm beträgt. Daran schließt sich das Gebiet II an, in dem die Amplitude A des empfangenen Ultraschallechosignals bei konstanter Porosität im Mittel annähernd linear mit zunehmender Tiefe d abnimmt (annähernd konstante mittlere Steigung), bis schließlich eine erneute Amplitudenerhöhung im Bereich III gemessen wird, die dem Rückwandechosignal zuzuordnen ist. In dieser Figur ist nun deutlich zu erkennen, dass die Amplitude A des empfangenen Ultraschallsignals bei dem porösen Bauteil signifikant deutlicher mit zunehmender Tiefe d abnimmt (größerer Betrag der mittleren Steigung) als bei einem Bauteil mit geringer Porosität.

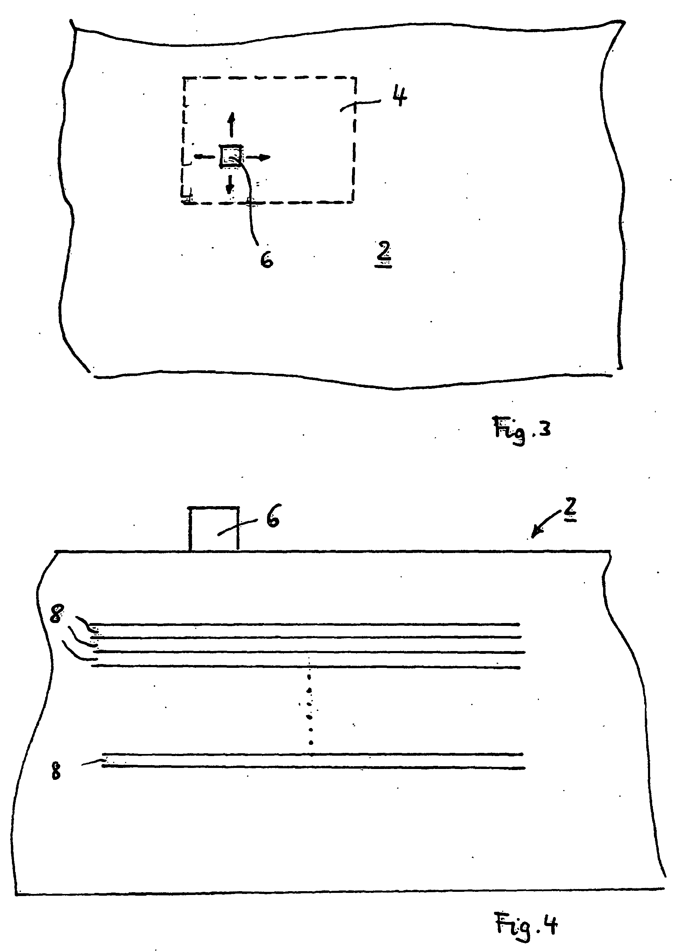

Anhand von Fig. 3 und 4 wird die Vorgehensweise gemäß der Erfindung näher erläutert. Fig. 3 zeigt eine schematische Draufsicht auf ein Bauteil 2, aus dem ein zu beurteilendes Flächengebiet 4, im dargestellten Ausführungsbeispiel ein rechteckiger Oberflächenbereich, ausgewählt ist, in dem mit Hilfe eines Prüfkopfes 6 eine Mehrzahl von Messungen in unterschiedlichen Prüfpositionen durchgeführt werden. Hierzu wird der Prüfkopf 6, wie dies anhand von Pfeilen veranschaulicht ist, in unterschiedlichen Prüfpositionen des Oberflächenbereiches 4 positioniert und in jeder dieser Prüfposition eine Messung vorgenommen. Im dargestellten Ausführungsbeispiel ist ein Prüfkopf 6 mit einem Ultraschallwandler vorgesehen, der als Sender und Empfänger dient. Grundsätzlich können auch Sende- und Empfangswandler räumlich getrennt voneinander angeordnet sein. Dies hat den Vorteil, dass die Amplitude im Bereich I (Eintrittsecho) verringert ist und damit der Messbereich näher zur Oberfläche des Bauteils hin erweitert wird.

Besonders vorteilhaft ist eine rotationssymmetrische Wandleranordnung, beispielsweise ein kreisscheibenförmiger Sendewandler, der von einem kreisringförmigen Empfangswandler umgeben ist. Durch die Rotationssymmetrie ist sichergestellt, dass die Messergebnisse unabhängig von der Drehorientierung des Prüfkopfes sind.

Im Bauteil 2 werden gemäß Fig. 4 eine Vielzahl von parallel zur Oberfläche angeordneten Schichten 8 unterschiedlicher Tiefe d festgelegt, denen über die Laufzeit jeweils eine Amplitude A des vom Ultraschallempfänger 6 empfangenen Ultraschallsignals zugeordnet wird. Die Schichtdicke dieser Schichten 8 muss dabei nicht mit der Dicke der einzelnen Lagen des Verbundwerkstoffes übereinstimmen.

Die in unterschiedlichen Prüfpositionen und für unterschiedliche Schichten 8 gemessenen Ultraschallamplituden werden nun statistisch ausgewertet, beispielsweise durch Bilden des arithmetischen Mittelwertes der zu einer Schicht gehörenden, in den verschiedenen Prüfpositionen jeweils ermittelten Amplituden. Eine solche statistische Auswertung in einer Mehrzahl von Prüfpositionen ist erfoderlich, da in einer Prüfposition nicht zwingend für jede Schicht 8 eine relevante Amplitude des Ultraschallechosignal vorliegen muss.

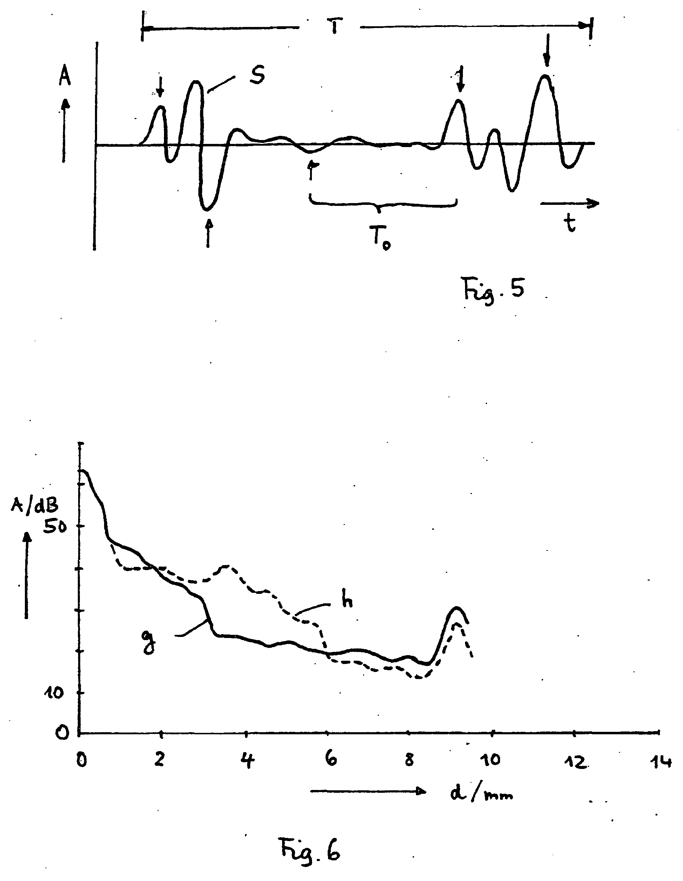

Ein besonders geeignetes Verfahren zum Erfassen der relevanten Amplituden des Ultraschallechosignals ist ein sogenanntes A-LOK-Verfahren, bei dem die Empfangseinrichtung mit einer zeitlichen Blende (Zeitfenster T) arbeitet, die länger ist als die zu erfassende Dicke der jeweiligen Schicht. Bei diesem Verfahren wird eine relevante Amplitude anhand des Signalverlaufs des empfangenen Ultrasehallechosignals dadurch erkannt, dass die Amplitude des Ultraschallechosignals zwischen wenigstens einer Ultraschallhalbwelle vor dieser Amplitude und einer Ultraschallhalbwelle nach dieser Amplitude betragsmäßig größer ist als die Amplitude dieser Halbwellen. Dies ist in Fig. 5 anhand eines beispielhaften Verlaufes eines innerhalb des gewählten Zeitfensters erfassten Ultraschallechosignals S näher erläutert. Mit diesem Verfahren als relevant erkannte Amplituden sind durch einen Pfeil hervorgehoben. Jeder relevanten Amplitude wird über die Laufzeit t (Tiefe) eine Schicht zugeordnet. In der Figur ist zu erkennen, dass auch.größere Zeitbereiche T₀ auftreten können, in denen.eine relevante Amplitude nicht gemessen wird, so dass für den Fall, dass dieses Zeitfenster größer ist als die Schichtdicke, für diese Schicht keine relevante Amplitude vorliegt.

Im Diagramm gemäß Fig. 6 sind Messungen an zwei porösen CFK-Bauteilen in Kurven g, h wiedergegeben. Aufgetragen ist die Amplitude A des Ultraschallechosignales gegen die Tiefe d (Laufzeit) . Anhand des unterschiedlichen Steigungsverlaufes der einzelnen Kurven g und h ist nun zu erkennen, dass bei dem durch die Kurve g wiedergegebenen Bauteil die Porosität in O-berflächennähe auf grund der größeren Steilheit größer ist als die Porosität in der Bauteilmitte oder in der Nähe der Rückwand. In Kurve h ist nun zu erkennen, dass ein Anstieg der Amplitude des Rückstreuechosignals in der Mitte des Bauteils mit anschließender betragsmäßig größerer Steigung (steilerer. Abfall) als im oberflächennahen Bereich erfolgt. Dies lässt auf eine erhöhte Porosität-in der Bauteilmitte schließen. Aus der nahezu gleichen Amplitude des Rückwandechos für beide Bauteile kann nun gefolgert werden, dass der über die Tiefe d gemittelte Porositätswert beider Bauteile annähernd gleich ist.

## Patentansprüche

1. Verfahren zum Ermitteln der Porosität eines Werkstückes (2), insbesondere eines Werkstückes (2) aus einem Faserverbundwerkstoff, bei dem in das Werkstück (2) ein Ultraschallsignal eingekoppelt und aus dem Werkstück (2) ein Ultraschallechosignal empfangen wird,
**dadurch gekennzeichnet, dass** dessen Amplitude (A) in Abhängigkeit von der Laufzeit gemessen und einer Tiefe (d) zugeordnet wird und der Verlauf der Amplitude (A) gegen die Tiefe (d) als Maß für die Porosität in der jeweiligen Tiefe (d) herangezogen wird.

2. Verfahren nach Anspruch 1, bei dem das Werkstück (2) in einem zu untersuchenden Flächengebiet (4) in eine Mehrzahl von Schichten (8) unterschiedlicher Tiefe (d) aufgeteilt und auf den Flächengebiet (4) in einer Prüfposition ein Ultraschallprüfkopf (6) aufgesetzt wird, mit dem ein Ultraschallsignal in das Werkstück (2) eingekoppelt sowie ein Ultraschallechosignal aus dem Werkstück (2) empfangen und die zu jeder Schicht gehörende Amplitude (A) gemessen wird, und bei dem der Verlauf der Amplitude (A) gegen die Tiefe (d) der Schicht (8) als Maß für die Porosität in der jeweiligen Schicht (8) herangezogen wird.

3. Verfahren nach Anspruch 2, bei dem das Flächengebiet (4) eine Mehrzahl von Prüfpositionen umfasst und die in den einzelnen Prüfpositionen jeweils gemessene Amplitude (A) des zu den einzelnen Schichten (8) gehörenden Ultraschallechosignals gemittelt werden.

4. Verfahren nach Anspruch 2 oder 3, bei dem die zu einer Schicht (8) gehörenden Amplituden (A) der Ultraschallechosignale mit einem ALOK-Verfahren ermittelt werden.

5. Verfahren nach einem der vorhergehenden Ansprüche, bei dem eine mittlere Steigung der von der Tiefe (d) abhängigen Amplitude (A) als das Maß für die Porosität herangezogen wird.

## Claims

1. Method of determining the porosity of a workpiece (2), in particular a workpiece (2) made of a fibre composite material, in which an ultrasonic signal is injected into the workpiece (2) and an ultrasonic echo signal is received from the workpiece (2), **characterized in that** the amplitude (A) of the said echo signal is measured as a function of the transit time and assigned to a depth (d) and the variation of the amplitude (A) with respect to the depth (d) is used as a measure of the porosity at the respective depth (d).

2. Method according to Claim 1, in which the workpiece (2) is divided in an area region (4) to be investigated into a number of layers (8) of different depths (d) and an ultrasonic test head (6) is placed onto the area region (4) in a test position and used for injecting an ultrasonic signal into the workpiece (2) and receiving an ultrasonic echo signal from the workpiece (2) and for measuring the amplitude (A) belonging to each layer, and in which the variation of the amplitude (A) with respect to the depth (d) of the layer (8) is used as a measure of the porosity in the respective layer (8).

3. Method according to Claim 2, in which the area region (4) comprises a number of test positions and the amplitude (A) of the ultrasonic echo signal belonging to the individual layers (8) that is respectively measured in the individual test positions is averaged.

4. Method according to Claim 2 or 3, in which the amplitudes (A) of the ultrasonic echo signals that belong to a layer (8) are determined by an ALOK method.

5. Method according to one of the preceding claims, in which an average slope of the amplitude (A), dependent on the depth (d), is used as the measure of the porosity.

## Revendications

1. Procédé de détermination de la porosité d'une pièce (2), notamment d'une pièce en un matériau composite à fibres, dans lequel on injecte un signal ultrasonore dans la pièce (2) et on reçoit de la pièce (2) un signal d'écho ultrasonore,
**caractérisé**
**en ce que** l'on mesure son amplitude (A) en fonction du temps de propagation et on l'associe à une profondeur (d) et on tire parti de la variation de l'amplitude (A) en fonction de la profondeur (d) comme mesure de la porosité aux profondeurs (d) respectives.

2. Procédé suivant la revendication 1, dans lequel on subdivise la pièce (2) dans une zone (4) de surface à étudier en une multiplicité de couches (8) de profondeurs (d) différentes et on met sur la zone (4) de surface en une position de contrôle une tête (6) de contrôle d'ultrasons par laquelle on injecte un signal ultrasonore dans la pièce (2) ainsi qu'on reçoit un signal d'écho ultrasonore de la pièce (2) et on mesure l'amplitude (A) appartenant à chaque couche, et dans lequel on tire parti de la variation de l'amplitude (A) en fonction de la profondeur (d) de la couche (8) comme mesure de la porosité dans la couche (8) respective.

3. Procédé suivant la revendication 2, dans lequel la zone (4) de surface comprend une multiplicité de positions de contrôle et on fait la moyenne de l'amplitude (A), mesurée respectivement dans les diverses positions de contrôle, du signal d'écho ultrasonore appartenant aux diverses couches (8).

4. Procédé suivant la revendication 2 ou 3, dans lequel on détermine l'amplitude (A), appartenant à une couche (8), du signal d'écho ultrasonore par un procédé ALOK.

5. Procédé suivant l'une des revendications précédentes, dans lequel on tire parti d'une pente médiane de l'amplitude (A) en fonction de la profondeur (d) en tant que mesure de la porosité.
